Europäisches Patentamt

European Patent Office

Office européen des brevets

(11) Veröffentlichungsnummer : **0 040 322**
**B1**

## (12) EUROPÄISCHE PATENTSCHRIFT

(45) Veröffentlichungstag der Patentschrift :
**21.03.84**

(21) Anmeldenummer : **81102785.3**

(22) Anmeldetag : **11.04.81**

(51) Int. Cl.$^3$ : **G 01 N 27/72, G 01 N 15/04, B 03 B 5/28, B 03 C 1/00, G 01 R 33/12**

(54) **Prüfverfahren zur Ermittlung der magnetischen Eigenschaften ferromagnetischer Pulver.**

(30) Priorität : **16.05.80 DE 3018640**

(43) Veröffentlichungstag der Anmeldung :
**25.11.81 Patentblatt 81/47**

(45) Bekanntmachung des Hinweises auf die Patenterteilung : **21.03.84 Patentblatt 84/12**

(84) Benannte Vertragsstaaten :
**AT DE FR GB IT**

(56) Entgegenhaltungen :
**US-A- 3 896 660**
**US-A- 3 985 646**
**Soviet Invention Illustrated Week B32, 21 September 1979 Section R16**

(73) Patentinhaber : **HOECHST AKTIENGESELLSCHAFT**
**Postfach 80 03 20**
**D-6230 Frankfurt am Main 80 (DE)**

(72) Erfinder : **Uhle, Karlheinz, Dr.**
**Wittelsbacher Strasse 23**
**D-5040 Brühl (DE)**
Erfinder : **Krämer, Horst, Dr.**
**Krimhildstrasse 3**
**D-5030 Hürth-Hermülheim (DE)**

Prüfverfahren zur Ermittlung der magnetischen Eigenschaften ferromagnetischer Pulver

Die vorliegende Erfindung betrifft ein Prüfverfahren zur Ermittlung der magnetischen Eigenschaften von ferromagnetischen Pulvern für Schwertrüben zur Schwimm-Sink-Aufbereitung von Mineralien.

Als Schwimm-Sink-Aufbereitung bezeichnet man die Trennung von Mineralien verschiedener Dichte mit der wäßrigen Suspension eines Schwerstoffes, der sog. Schwertrübe, deren spezifisches Gewicht zwischen den Dichten der zu trennenden Mineralien liegt, wodurch beim Einbringen des Mineralgemenges in die Schwerstoff-Suspension der leichtere Anteil aufschwimmt, während der schwere Anteil absinkt. Da ein Teil der Schwerstoff-Suspension am aufgeschwommenen und am abgesunkenen Anteil anhaftet, werden beide Anteile nach ihrer Trennung abgebraust, so daß der vorher anhaftende Schwerstoff in Form einer verdünnten Suspension zurückgewonnen wird. Die Abtrennung des Schwerstoffes aus dieser verdünnten Suspension ist wegen der geringen Korngröße des Schwerstoffes beispielsweise durch Filtration nicht möglich. Deswegen werden als Schwerstoffe bevorzugt ferromagnetische Pulver verwendet, welche aus der verdünnten Suspension durch Magnetscheidung zurückgewonnen und darüberhinaus von unmagnetischen Verunreinigungen befreit werden können. So eignet sich in erster Linie Magnetit zur Herstellung von Schwerstoff-Suspension mit niedrigem und Ferrosilicium mit 8 bis 25 % Si zur Herstellung von solchen mit höherem spezifischen Gewicht, wobei der Kornbereich der durch Verdüsen oder Vermahlen hergestellten Schwerstoffe zwischen 0,001 und 0,4 mm liegt. Die zurückgewonnenen Schwerstoffe, welche durch die Magnetscheidung magnetisiert werden, müssen vor ihrem erneuten Einsatz zur Bereitung von Schwerstoff-Suspensionen entmagnetisiert werden, da magnetisierte Pulver keine stabilen Suspensionen bilden. Die Entmagnetisierung des zurückgewonnenen Schwerstoffes kann durch Erhitzen auf Temperaturen oberhalb seines Curie-Punktes oder, weniger aufwendig, durch Abmagnetisierung im Wechselfeld erfolgen. Je nach Produktionslage und in Abhängigkeit von Qualität und Menge der Ausgangsmaterialien können Schwerstoff-Pulver mit mehr oder weniger guten magnetischen Eigenschaften hergestellt werden, was Auswirkungen auf ihre Fähigkeit hat, im Wechselfeld abmagnetisiert zu werden. Besonders wenn zur Erhöhung der Korrosionsbeständigkeit des Schwerstoffes weitere Komponenten, beispielsweise bei Ferrosilicium außer Kohlenstoff noch Phosphor, Kupfer, Aluminium u. a., zugesetzt werden (vergl. DE-C-972 687 und DE-C-2 222 657), entsteht ein bezüglich seiner magnetischen Eigenschaften unübersichtliches Vielstoffsystem.

Es ist daher Aufgabe der vorliegenden Erfindung, ein einen geringen Meßaufwand erforderndes Prüfverfahren anzugeben, welches die Beurteilung von ferromagnetischen Pulvern in Bezug auf ihre Eignung für Schwertrüben zur Schwimm-Sink-Aufbereitung erlaubt. Ein solches Verfahren ist erfindungsgemäß dadurch gekennzeichnet, daß man

a) das eine Korngröße im Bereich von 63 bis 100 $\mu$m aufweisende ferromagnetische Pulver mit einer solchen Menge eines Glycerin-Wasser-Gemisches ansetzt, daß eine Trübe mit einer Dichte von 1,45 bis 1,55 g/cm³ gebildet wird ;

b) die Trübe in einem zyklisch abnehmenden Wechselfeld mit maximalen Feldstärken von 1 200 bis 1 600 A/cm abmagnetisiert und anschließend die relative Sinkgeschwindigkeit der Trübe mit Hilfe eines Sedimentometers bestimmt ;

c) die abmagnetisierte Trübe in einem magnetischen Gleichfeld mit Feldstärken von 700 bis 900 A/cm aufmagnetisiert und anschließend die relative Sinkgeschwindigkeit der Trübe mit Hilfe eines Sedimentometers bestimmt ;

d) die aufmagnetisierte Trübe in einem zyklisch abnehmenden Wechselfeld mit maximalen Feldstärken von 1 200 bis 1 600 A/cm abmagnetisiert und anschließend die relative Sinkgeschwindigkeit der Trübe mit Hilfe eines Sedimentometers bestimmt ;

wobei das ferromagnetische Pulver unbeschränkt zum Einsatz in Schwertrüben geeignet ist, wenn die relative Sinkgeschwindigkeit gemäß Schritt b) kleiner als 0,25 cm/s, gemäß Schritt c) größer als 2,5 cm/s und gemäß Schritt d) kleiner als 0,4 cm/s ist.

Dabei kann das Glycerin-Wasser-Gemisch Glycerin und Wasser im Gewichtsverhältnis (0,9 bis 1,1) : 1 enthalten.

Es empfiehlt sich, das ferromagnetische Pulver mit dem Glycerin-Wasser-Gemisch in einem Glaszylinder von etwa 18 bis 20 cm Länge, 18 bis 20 mm Außendurchmesser und einer Wandstärke von 1,0 bis 1,5 mm anzusetzen und darin den Ab- bzw. Aufmagnetisierungen zu unterwerfen sowie die jeweiligen Sinkgeschwindigkeiten zu bestimmen.

Mit dem Prüfverfahren gemäß der vorliegenden Erfindung kann in kurzer Zeit unter Einsatz kleiner Probemengen festgestellt werden, ob ein erzeugtes ferromagnetisches Pulver einerseits magnetisierbar genug ist, um durch Magnetscheidung zuverlässig von wäßriger Phase abgetrennt werden zu können, und ob dieses Pulver andererseits magnetisch weich genug, um hinreichend abmagnetisiert werden zu können.

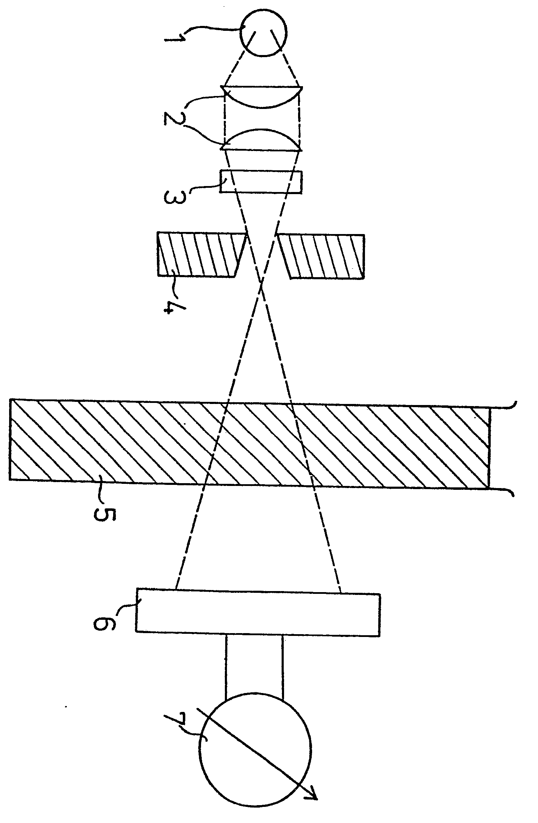

In der beigefügten Zeichnung ist der Aufbau des beim erfindungsgemäßen Prüfverfahren verwendeten Sedimentometers schematisch wiedergegeben.

Von einer als Lichtquelle 1 dienenden Niedervoltlampe fällt Licht auf ein aus mehreren Linsen bestehendes Kollektorsystem 2. Der das Kollektorsystem 2 verlassende Lichtstrahl trifft nach Passieren eines Wärmeabsorptionsfilters 3 und einer Spaltblende 4 auf einen Glaszylinder 5, in welchem sich Trübe

# 0 040 322

befindet. Der den Glaszylinder 5 durchdringende Teil des Lichtstrahls trifft auf eine Photozelle 6, welche mit einem Meßinstrument 7 elektrisch leitend verbunden ist.

In Abhängigkeit von der Sinkgeschwindigkeit des Pulvers in der Trübe beginnt das Meßinstrument 7 dann auszuschlagen, wenn die letzten Pulverteilchen mit größtem Durchmesser gerade vorbeigefallen sind.

Beim Prüfverfahren gemäß der Erfindung werden zur Bestimmung der Sinkgeschwindigkeit der Abstand zwischen der Spaltblende 4 und dem Spiegel der Trübe im Glaszylinder 5 sowie der Zeitraum von Einsetzen des mit unmittelbar vorher frisch aufgeschütteler Trübe gefüllten Glaszylinders 5 in das Sedimentometer bis zum Erreichen eines festgelegten Ausschlages des Meßinstrumentes 7 herangezogen. Dabei entspricht der festgelegte Ausschlag 10 % des Ausschlages am Meßinstrument 7, welcher auftritt, wenn der Glaszylinder 5 mit einem feststofffreien Glycerin-Wasser-Gemisch mit gleichem Gewichtsverhältnis von Glycerin zu Wasser gefüllt ist.

## Beispiel 1

Ein Glaszylinder von 18 cm Länge und 18 mm Außendurchmesser wurde mit 13 ml eines Glycerin-Wasser-Gemisches im Gewichtsverhältnis 1 : 1 gefüllt und in das Sedimentometer eingesetzt. Nach einer Sekunde war am Meßinstrument ein Photostrom von 3 μA ablesbar, welcher sich nicht mehr veränderte.

In den aus dem Sedimentometer entnommenen Glaszylinder wurden 10 g Ferrosilicium-Pulver, welches 12,5 Gew.% Silicium und 1 Gew.% Phosphor enthielt, mit einer Korngröße zwischen 63 und 100 μm unter Erhalt einer Trübe eingefüllt. Die aufgeschüttelte Trübe wurde in einem zyklisch abnehmenden Wechselfeld mit maximalen Feldstärken von 1 200 A/cm abmagnetisiert. Die erneut aufgeschüttelte Trübe wurde in das Sedimentometer eingesetzt. Nach 40 Sekunden wurde ein Photostrom von 0,3 μA abgelesen. Aus diesem Wert und dem Abstand zwischen dem Trübespiegel und der Spaltblende von 8 cm errechnete sich eine relative Sinkgeschwindigkeit von 0,20 cm/s. Nach erneuter Aufschüttelung wurde die Trübe in einem magnetischen Gleichfeld von 700 A/cm aufmagnetisiert und wiederum die aufgeschüttelte Trübe in das Sedimentometer eingesetzt. Nach 2,6 Sekunden wurde ein Photostrom von 0,3 μA abgelesen. Aus diesem Wert und dem Abstand zwischen dem Trübespiegel und der Spaltblende von 8 cm wurde eine relative Sinkgeschwindigkeit von 3,1 cm/s errechnet. Nach einer weiteren Aufschüttelung wurde die Trübe in einem zyklisch abnehmenden Wechselfeld mit maximalen Feldstärken von 1 200 A/cm abmagnetisiert. Die erneut aufgeschüttelte Trübe wurde in das Sedimentometer eingesetzt, an dessen Meßinstrument nach 28,6 Sekunden ein Photostrom von 0,3 μA abgelesen wurde. Zusammen mit dem Abstand zwischen Trübespiegel und Spaltblende von 8 cm errechnete sich daraus eine relative Sinkgeschwindigkeit von 0,28 cm/s.

## Beispiele 2 bis 8

Das Beispiel 1 wurde unter Benutzung von Ferrosilicium-Pulvern mit unterschiedlichen Silicium- und Phosphorgehalten wiederholt.

Die Silicium- und Phosphorgehalte der verschiedenen Ferrosilicium-Pulver der Beispiele 1 bis 8 sowie die relativen Sinkgeschwindigkeiten (I : nach erster Abmagnetisierung ; II : nach Aufmagnetisierung ; III : nach zweiter Abmagnetisierung) sind in der folgenden Tabelle zusammengefaßt :

| Beispiel | Gew.% Si | Gew.% P | Relative Sinkgeschwindigkeit cm/s | | |
|---|---|---|---|---|---|
| | | | I | II | III |
| 1 | 12,5 | 1,0 | 0,20 | 3,1 | 0,28 |
| 2 | 11,9 | 1,5 | 0,22 | 2,8 | 0,26 |
| 3 | 15,0 | 2,0 | 0,23 | 2,6 | 0,27 |
| 4 | 14,5 | 2,7 | 0,24 | 2,6 | 0,53 |
| 5 | 14,9 | 3,0 | 0,24 | 2,6 | 0,80 |
| 6 | 15,6 | 2,5 | 0,23 | 2,8 | 1,6 |
| 7 | 13,1 | 4,2 | 0,28 | 3,2 | 0,90 |
| 8 | 12,0 | 6,1 | 0,30 | 3,0 | 1,3 |

Die Ferrosilicium-Pulver gemäß den Beispielen 1 bis 3 weisen relative Sinkgeschwindigkeiten von
I kleiner als 0,25 cm/s
II größer als 2,5 cm/s
III kleiner als 0,4 cm/s
auf und sind daher zum Einsatz in Schwertrüben zur Schwimm-Sink-Aufbereitung von Mineralien unbeschränkt geeignet. Die Ferrosilicium-Pulver gemäß den Beispielen 4 und 5 weisen relative Sinkge-

3

schwindigkeiten auf, welche demgegenüber bei III zwischen 0,4 und 1 cm/s liegen ; mit diesen Pulvern können daher bei ihrer Anwendung im Schwimm-Sink-Verfahren Trennschwierigkeiten auftreten.

Die Ferrosilicium-Pulver gemäß den Beispielen 6 bis 8 weisen relative Sinkgeschwindigkeiten auf, welche im wesentlichen alle von denen der Ferrosilicium-Pulver nach den Beispielen 1 bis 3 abweichen ; diese Pulver sind daher zum Einsatz in Schwertrüben zur Schwimm-Sink-Aufbereitung ungeeignet.

## Ansprüche

1. Prüfverfahren zur Ermittlung der magnetischen Eigenschaften von ferromagnetischen Pulvern für Schwertrüben zur Schwimm-Sink-Aufbereitung von Mineralien, dadurch gekennzeichnet, daß man

a) das eine Korngröße im Bereich von 63 bis 100 $\mu$m aufweisende ferromagnetische Pulver mit einer solchen Menge eines Glycerin-Wasser-Gemisches ansetzt, daß eine Trübe mit einer Dichte von 1,45 bis 1,55 g/cm$^3$ gebildet wird ;

b) die Trübe in einem zyklisch abnehmenden Wechselfeld mit maximalen Feldstärken von 1 200 bis 1 600 A/cm abmagnetisiert und anschließend die relative Sinkgeschwindigkeit der Trübe mit Hilfe eines Sedimentometers bestimmt ;

c) die abmagnetisierte Trübe in einem magnetischen Gleichfeld mit Feldstärken von 700 bis 900 A/cm aufmagnetisiert und anschließend die relative Sinkgeschwindigkeit der Trübe mit Hilfe eines Sedimentometers bestimmt ;

d) die aufmagnetisierte Trübe in einem zyklisch abnehmenden Wechselfeld mit maximalen Feldstärken von 1 200 bis 1 600 A/cm abmagnetisiert und anschließend die relative Sinkgeschwindigkeit der Trübe mit Hilfe eines Sedimentometers bestimmt ; wobei das ferromagnetische Pulver unbeschränkt zum Einsatz in Schwertrüben geeignet ist, wenn die relative Sinkgeschwindigkeit gemäß Schritt b) kleiner als 0,25 cm/s, gemäß Schritt c) größer als 2,5 cm/s und gemäß Schritt d) kleiner als 0,4 cm/s ist.

2. Prüfverfahren nach Anspruch 1, dadurch gekennzeichnet, daß das Glycerin-Wasser-Gemisch Glycerin und Wasser im Gewichtsverhältnis 0,9 : 1 bis 1,1 : 1 enthält.

## Claims

1. Testing method for determining the magnetic properties of ferromagnetic powder for heavy medium suspensions for the float-sink dressing of minerals, which comprises :

a) adding to ferromagnetic powder particles with a size within the range 63 to 100 $\mu$ a quantity of a glycerol/water mixture necessary to obtain a heavy medium suspension having a specific density within the range 1.45 to 1.55 g/cm$^3$ ;

b) demagnetizing the heavy medium suspension in a cyclicly decreasing alternating field at maximum field intensities within the range 1 200 to 1 600 amperes/cm and determining the relative sedimentation velocity of the heavy medium suspension by means of a sedimentometer ;

c) remagnetizing the demagnetized heavy medium suspension in a magnetic steady field at field intensities within the range 700 to 900 amperes/cm and determining the relative sedimentation velocity of the heavy medium suspension by means of a sedimentometer ; and

d) demagnetizing the remagnetized heavy medium suspension in a cyclicly decreasing alternating field at maximum field intensities within the range 1 200 to 1 600 amperes/cm and determining the relative sedimentation velocity of the heavy medium suspension by means of a sedimentometer ; the ferromagnetic powder being fully serviceable for use in heavy medium suspensions in the event of the relative sedimentation velocity determined in step b) being smaller than 0.25 cm/second, that determined in step c) being greater than 2.5 cm per second and that determined in step d) being smaller than 0.4 cm/second.

2. Testing method as claimed in claim 1, wherein the glycerol/water-mixture contains glycerol and water in a ratio by weight of 0.9 : 1 to 1.1 : 1.

## Revendications

1. Méthode d'essai pour déterminer les propriétés magnétiques de poudres ferromagnétiques pour liqueurs denses destinées à la préparation de minerais par flottation et sédimentation, caractérisée en ce que :

a) on ajoute à la poudre ferromagnétique présentant une granulométrie dans la gamme de 63-100 $\mu$ une quantité d'un mélange glycérol/eau nécessaire pour obtenir une liqueur dense d'une densité de 1,45-1,55 g/cm$^3$ ;

b) on démagnétise la liqueur dense dans un champ alternatif diminuant cycliquement à des intensités de champ maximales de 1 200-1 600 ampères/cm, puis on détermine la vitesse de sédimentation relative de la liqueur dense à l'aide d'un sédimentomètre ;

c) on remagnétise la liqueur dense démagnétisée dans un champ continu magnétique à des intensités de champ de 700-900 A/cm, puis on détermine la vitesse de sédimentation relative de la liqueur dense à l'aide d'un sédimentomètre ;

d) on démagnétise la liqueur dense remagnétisée dans un champ alternatif diminuant cycliquement à des intensités de champ maximales de 1 200-1 600 ampères/cm, puis on détermine la vitesse de sédimentation relative de la liqueur dense à l'aide d'un sédimentomètre,

la poudre ferromagnétique convenant parfaitement pour l'utilisation dans des liqueurs denses si la vitesse de sédimentation relative est inférieure à 0,25 cm/s dans l'étape b), supérieure à 2,5 cm/s dans l'étape c) et inférieure à 0,4 cm/s dans l'étape d).

2. Méthode d'essai selon la revendication 1, caractérisée en ce que le mélange glycérol/eau contient le glycérol et l'eau dans un rapport pondéral de 0,9 : 1 à 1,1 : 1.